# EUROPEAN PATENT SPECIFICATION

(11) **EP 4 358 106 B1**
(45) Date of publication and mention of the grant of the patent: **16.09.2026**
(21) Application number: 22383005.0
(22) Date of filing: 19.10.2022
(51) Int. Cl.: H01G 9/008, H01G 9/26, H01G 11/14, H01G 11/76, H01G 2/10, H01G 4/38, H01G 4/32, H01G 4/248, H01G 2/06, H01G 2/04, H01G 4/40

(54) **CAPACITOR COMPRISING OVERLAPPING BUSBARS**
KONDENSATOR BEINHALTEND ÜBERLAPPENDEN STROMSCHIENEN
CONDENSATEUR COMPRENANT DES BARRES OMNIBUS SUPERPOSÉES

(43) Date of publication of application: 24.04.2024
(73) Proprietor: TDK Electronics AG, 81671 München (DE)
(72) Inventor: Gómez, Manuel, 29100 COÍN (ES); Rodríguez, Fernando, 29590 MÁLAGA (ES); Wagner, Tomás, 29010 MÁLAGA (ES); Peláez, David, 29620 TORREMOLINOS (ES); Coín Ruíz, Alberto, 29790 RINCÓN DE LA VICTORIA (ES); Mercado, Justo, 29590 MÁLAGA (ES)
(74) Representative: Epping - Hermann - Fischer

(56) References cited:
- US-B2- 11 404 215

## Description

The present invention concerns a capacitor. In particular, the capacitor may be a metallized DC-link film capacitor.

Metallized film DC-Link capacitors are critical components for many power electronics applications: renewable energies, electric vehicles, traction, motor drives, uninterruptible power supply, energy transmission, etc.

DC-Link capacitor requirements strongly depend on the parameters of a semiconductor implemented in a converter connected to the capacitor and a modulation strategy of the converter.

The development of Wide-bandgap semiconductors (WBGS), to higher on-state voltage, has changed the characteristics of high power converters: higher switching frequencies, higher harmonic frequencies, lighter cooling systems, higher power density, more compact designs, etc.

As a consequence, in order to work correctly in such applications, the capacitor should be able to be operated at high frequencies, e.g., frequencies above 10 kHz, without too many losses due to parasitic inductances and resistances.

US 11 404 215 B2 discloses a capacitor includes at least two winding elements, a first busbar and a second busbar, wherein the first busbar and the second busbar are arranged such that they overlap each other.

A capacitor is provided according to claim 1 and the use of such a capacitor in power electronics applications is provided in claim 16. Further embodiments are defined in the dependent claims.

A capacitor is proposed that comprises at least one capacitor unit. The capacitor unit comprises at least two winding elements, a first busbar, a second busbar, a third busbar and a fourth busbar, wherein all winding elements of the capacitor unit are arranged in a single stack, wherein the first busbar and the second busbar are arranged such that they overlap each other, wherein the first busbar and the second busbar are arranged at a lateral face of the stack which has a surface normal perpendicular to a stacking direction of the stack, wherein, in a stacking direction, alternatingly either the first busbar or the second busbar is connected to a top face of the winding elements, wherein the third busbar and the fourth busbar are arranged such that they overlap each other, wherein the third and the fourth busbar are arranged on a lateral face of the stack opposite to the lateral face at which the first busbar and the second busbar are arranged, wherein, in a stacking direction, alternatingly either the third busbar or the fourth busbar is connected to a bottom face of the winding elements, such that the third busbar is connected to the bottom faces of the winding elements which have a top face that is connected to the second busbar and that the fourth busbar is connected to the bottom faces of the winding elements which have a top face that is connected to the first busbar. For example, the capacitor unit may comprise four winding elements. Each busbar comprises a terminal which is configured to be connected to an external connection. Each busbar comprises a substantially flat metal plate with tabs being arranged at a lower end of the flat metal plate and the terminal being arranged at an upper end of the flat metal plate.

Embodiments provide an improved capacitor, for example, a capacitor has low and internally homogeneous losses at high switching frequencies.

A winding element may be a capacitance unit. Each winding element of the capacitor may have the same capacitance. Each winding element may have a first pole of a first polarity, e.g., a positive polarity, and a second pole of a second polarity, e.g., a negative polarity. By applying a voltage between the first and the second pole, energy may be stored in the winding element.

A busbar may be a metallic strip or a metallic bar configured for local high current power distribution.

A small inductance between the winding elements is important for a power capacitor as a high inductance would result in resonance effects and high losses due to parasitic inductances and resistances.

Overall, homogeneous impedance can be provided by each winding element having the same capacitance and by each connection from a terminal to a winding element having the same inductance. Due to design requirements, it may not always be possible to provide the same inductance for each winding element. Thus, instead of trying to adapt the inductances to each other, it is proposed to reduce the inductances to minimal values by cancelling or weakening the magnetic fields.

A capacitor with a first and a second busbar overlapping each other may have a low equivalent series resistance (ESR), a frequency-stable ESR, a low equivalent series inductance (ESL), and a homogeneous internal current distribution. Internal resonances may be avoided.

The first busbar and the second busbar may be arranged such that at least 20% of the area of the first busbar is overlapped by the second busbar. In the area of the overlap of the busbars, a thin isolator may be arranged between the busbars which prevents a short circuit between the busbars. The thin isolator may not significantly influence the magnetic fields.

The at least two winding elements may be arranged in a stack, wherein the first busbar and the second busbar are arranged at a lateral face of the stack. The lateral face of the stack may be a face that is perpendicular to a top face and a bottom face of the stack, wherein metallizations and connection elements for contacting the winding element are arranged on the top face and the bottom face of the winding elements. The top face of the stack may be formed by the top faces of the winding elements. The bottom face of the stack may be formed by the bottom faces of the winding elements.

The at least two winding elements are arranged in a stack, wherein the first busbar and the second busbar are arranged on at least two faces of the stack. In particular, the first and the second busbar may completely or partly cover one or more lateral faces, and/or the top face and/or the bottom face of the stack.

All winding elements are arranged in a single stack. The stack may comprise more than two winding elements.

In the stack, the top faces of each winding element may face in the same direction. The bottom face of each winding element may be opposite to the top face of the winding element. The top faces of the winding elements may form the top face of the stack. The bottom faces of the winding elements may form the bottom face of the stack that is opposite to the top face of the stack.

In this embodiment, the windings are connected to both busbars in an alternate way. Thereby, the polarities of the winding elements alternate along the stacking direction. In other words, in the stacking direction, each winding element has an opposite polarity compared to the adjacent winding element.

As a result, the magnetic flux may be compensated in all connections, including the connection between winding elements. This may result in only very small parasitic inductances and resistances between winding elements and between winding elements and terminals. By reducing the parasitic inductances and resistances, the impedance from the terminals to each winding is more homogeneous between the winding elements for each frequency in the bandwidth in which the capacitor may be operated. Thus, the performance of the capacitor in the complete bandwidth is better due to a low and frequency stable ESR, a low ESL from each pair of terminals, an homogeneous internal current distribution and the avoidance of internal resonances.

The first busbar may be folded in the section between the stacks and/or the second busbar may be folded in the section between the stacks. The fold may be formed by a 180° turn of the respective busbar.

The winding elements have a non-circular diameter. In particular, the winding element may be flat. Flat winding elements may be arranged in a stack such that no space is wasted between the winding elements.

The capacitor may be a DC link capacitor. The capacitor can be any kind of capacitor. For example, the capacitor may be a film capacitor. The capacitor may be a power capacitor.

The film capacitor may comprise metallized films.

In an embodiment, the first busbar and the second busbar are arranged such that at least 20% of the area of the first busbar is overlapped by the second busbar, and the third busbar and the fourth busbar are arranged such that at least 20% of the area of the third busbar is overlapped by the fourth busbar.

In an embodiment, the first busbar and the second busbar are arranged such that a current flowing through the first busbar generates a first magnetic field and a current flowing through the second busbar generates a second magnetic field, wherein the first magnetic field and the second magnetic field compensate each other. In the embodiment, the third busbar and the fourth busbar are arranged such that a current flowing through the third busbar generates a third magnetic field and a current flowing through the fourth busbar generates a fourth magnetic field, wherein the third magnetic field and the fourth magnetic field compensate each other.

In an embodiment, each winding element has a "A" pole and a "B" pole, wherein the "A" poles of each winding element are connected either to the first busbar or to the third busbar, and wherein the "B" poles of each winding element are connected either to the second busbar or to the fourth busbar.

In an embodiment, each of the busbars is connected to the winding elements directly, e.g. by welding or soldering.

In an embodiment, each busbar of the capacitor unit is connected to the top face or to the bottom face of the respective winding element.

Each busbar comprises a terminal which is configured to be connected to an external connection.

In an embodiment, in the stacking direction of the stack, each winding element has an opposite polarity compared to the adjacent winding element.

In an embodiment, the winding elements are arranged in the stack such that the top faces of the winding elements are arranged at the first lateral face of the stack and the bottom faces of the winding elements are arranged at the second lateral face of the stack.

In an embodiment, the winding elements have a non-circular diameter.

In an embodiment, capacitor may be a DC link capacitor.

According to another embodiment, the capacitor comprises two or more capacitor units, wherein each capacitor unit comprises at least two winding elements, e.g. four winding elements, a first busbar, a second busbar, a third busbar and a fourth busbar, wherein all winding elements of each capacitor unit are arranged in a single stack, wherein the first busbar and the second busbar are arranged such that they overlap each other, wherein the first busbar and the second busbar are arranged at a lateral face of the stack which has a surface normal perpendicular to a stacking direction of the stack, wherein, in a stacking direction, alternatingly either the first busbar or the second busbar is connected to a top face of the winding elements, wherein the third busbar and the fourth busbar are arranged such that they overlap each other, wherein the third and the fourth busbar are arranged on a lateral face of the stack opposite to the lateral face at which the first busbar and the second busbar are arranged, wherein, in a stacking direction, alternatingly either the third busbar or the fourth busbar is connected to a bottom face of the winding elements, such that the third busbar is connected to the bottom faces of the winding elements which have a top face that is connected to the second busbar and that the fourth busbar is connected to the bottom faces of the winding elements which have a top face that is connected to the first busbar. Each busbar comprises a terminal which is configured to be connected to an external connection. Each busbar comprises a substantially flat metal plate with tabs being arranged at a lower end of the flat metal plate and the terminal being arranged at an upper end of the flat metal plate.

In an embodiment, the two or more capacitor units are arranged such that the stacks of winding elements of each of the two or more capacitor units are arranged in a row wherein the stacking directions of the stacks are parallel to each other. Alternatively, the capacitor units may be arranged in multiple rows. For example, the capacitor may comprise four capacitor units, wherein two units are arranged in a first row and two units are arranged in a second row parallel to the first row. As another example, the capacitor may comprise six capacitor units, wherein three units are arranged in a first row and two units are arranged in a second row parallel to the first row. Moreover, other numbers of rows and capacitor units are also possible.

In an embodiment, the capacitor comprises an encapsulation which encloses the capacitor units.

In an embodiment, in each capacitor unit, each busbar of the capacitor unit is connected to the top face or to the bottom face of the respective winding element.

In an embodiment, each busbar comprises a terminal which is configured to be connected to an external connection.

In an embodiment, the capacitor may be a DC link capacitor.

In the following, the present invention is described with respect to the drawings:
Figure 1 shows a comparison of the ESR of a capacitor of the seventh embodiment and a reference capacitor.
Figure 2 shows a reference capacitor.
Figures 3 to 28 show example capacitors that do not fall within the scope of the claims.
Figures 29 to 32 show the capacitor according to different embodiments.

The present invention relates to a capacitor which is a DC link capacitor and which is designed, for example, for voltages above 600 V and switching frequencies of more than 10 kHz.

The capacitor comprises a plurality of winding elements 1. The capacitor may comprise any number of winding elements 1.

Each winding element 1 is wound around an axis. The axis extends from a bottom face 2 of the winding element 1 to a top face 3 of the winding element 1. The top face 3 of each winding element 1 is covered with a metallization 4, the so-called Schoop-layer. The metallization 4 of the top face 3 is connected to a first electrode or a first set of electrodes of the winding element. The bottom face 2 of each winding element 1 is also covered with a metallization 4, i.e., a Schoop-layer. The metallization 4 of the bottom face 3 is connected to a second electrode or a second set of electrodes of the winding element 1. The first electrode and the metallization 4 on the top face 3 or the first set of electrodes and the metallization 4 on the top face 3 form a first pole of the winding element 1. The second electrode and the metallization 4 on the bottom face 2 or the second set of electrodes and the metallization 4 on the bottom face 2 form a second pole of the winding element 1. During the operation of the capacitor 1, a voltage is applied between the first pole and the second pole.

For the sake of visualization, the first pole is marked with a "plus" in the drawings and the second pole is marked with a "minus". As alternating currents are applied, the polarizations can be altered continuously.

On the top face 3 and on the bottom face 2 of each winding element 1 a connection element, e.g., a connection stripe or a bonding wire, can be arranged.

The winding elements 1 have a non-circular cross section. In particular, the winding elements 1 are flat.

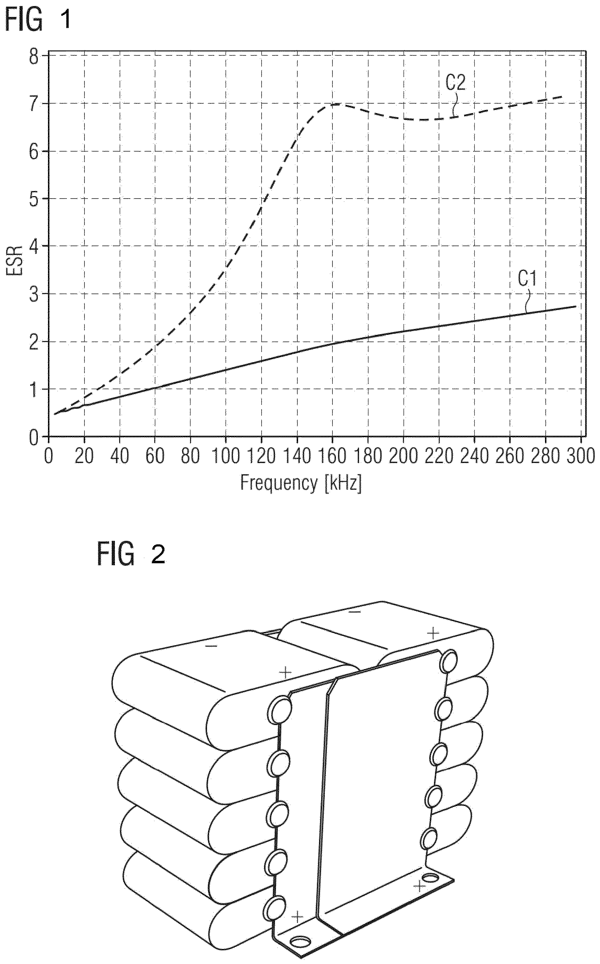

Figure 1 shows a plot of the ESR over the frequency of a capacitor according to an embodiment of the present invention represented by curve C1 compared to a reference capacitor as shown in Figure 2 wherein busbars of opposite polarities do not overlap each other represented by curve C2. It can be seen in Figure 1 that the ESR of the reference capacitor is higher than the ESR of the capacitor according to the embodiment and that it is less frequency-stable due to a nonhomogeneous internal current distribution and internal resonances. In particular, at frequencies higher than 10 KHz, a significant reduction in the ESR can be observed in the capacitor according to the seventh embodiment.

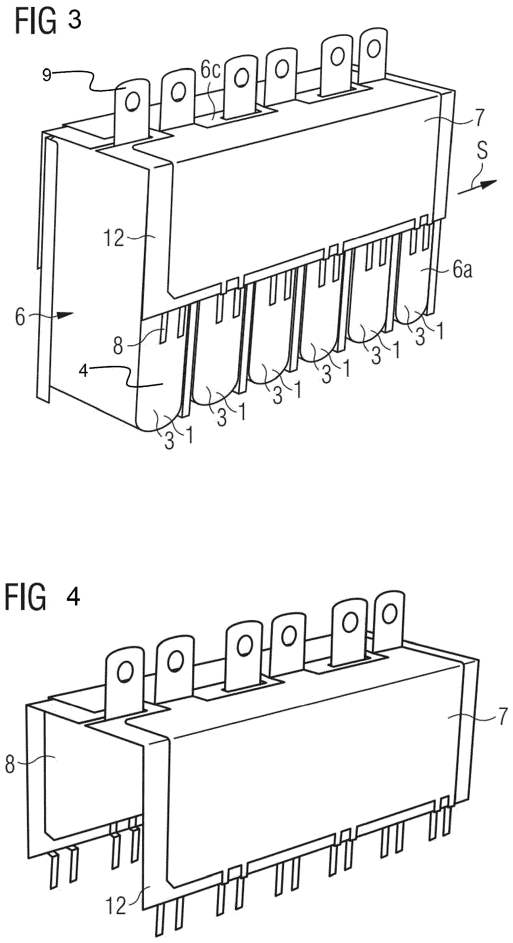

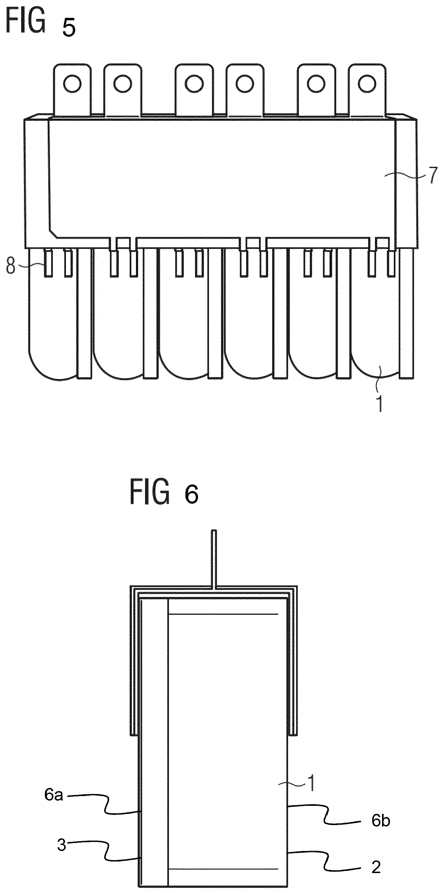

Figures 3 to 6 show a first example capacitor not according to the invention. Figures 3, 4 and 5 show perspective views of the first example capacitor. Figure 3 shows a first busbar 7 and a second busbar 8 of the capacitor. Moreover, Figure 4 shows an isolator plate 12 being arranged between the busbars 7, 8.

The capacitor comprises a first busbar 7 and a second busbar **8,** which enable contacting a stack 6 of winding elements 1. In particular, the first busbar 7 is configured to apply a voltage to the first electrode or the first set of electrodes of each winding element 1. The second busbar 8 is configured to apply a voltage to the second electrode or the second set of electrodes of each winding elements 1. The first busbar 7 comprises at least one terminal **9.** The first busbar 7 is configured to be connected to a pole of an external power supply, for example an insulated-gate bipolar transistor (IGBT), via the at least one terminal 9. The second busbar 8 also comprises at least one terminal 9. The second busbar 8 is configured to be connected to another pole of the external power supply, for example the insulated-gate bipolar transistor (IGBT), via the at least one terminal 9. Each of the first busbar 7 and the second busbar 8 can comprise more than one terminal 9.

The current flowing through the first busbar 7 generates a first magnetic field. The current flowing through the second busbar 8 generates a second magnetic field. As the first busbar 7 and the second busbar 8 overlap each other and as the currents in the first busbar 7 and the second busbar 8 have opposite directions, the magnetic fields generated in the first busbar 7 and in the second busbar 8 cancel each other or at least weaken each other. Thus, the arrangement of the busbars 7, 8 overlapping each other results in reduced magnetic fields of the busbars 7, 8. Thereby, the inductance of the busbars 7, 8 is reduced. As the inductance from the busbar 7, 8 to each of the winding element 1 is very low and homogeneous and as each winding element 1 has the same capacitance, each winding element 1 has almost the same impedance. If the winding elements 1 had different impedances, resonance effects in the capacitor, in particular when applying high switching frequencies above 10 kHz, would be unavoidable. Due to the overlapping busbars 7, 8, the impedance for each winding element 1 is almost the same such that no significant resonance effects occur. Accordingly, the losses in the capacitor can be reduced. In particular, parasitic inductances and resistances are strongly reduced. The impedance from the terminal 9 to each winding element 1 is homogeneous in all the frequency bandwidths. This results in a low equivalent series resistance (ESR), a frequency stable ESR, a low equivalent series inductance (ESL) and the avoidance of an internal resonance. This enables the operation of the capacitor at voltages above 600 V and at switching frequencies of more than 10 kHz.

The first busbar 7 is arranged on a first lateral face 6a of the stack and on a second lateral face 6b of the stack 6 which is opposite of the first lateral face 6a. The second busbar 8 is also arranged on the first lateral face 6a of the stack and on the second lateral face 6b of the stack 6. The first busbar 7 and the second busbar 8 overlap each other on both lateral faces 6a, 6b. On the first lateral face 6a, the top faces 3 of the winding elements 1 are alternatingly in the stacking direction connected either to the first busbar 7 or to the second busbar 8. On the second lateral face 6b, the bottom faces 3 of the winding elements 1 are alternatingly in the stacking direction connected either to the first busbar 7 or to the second busbar 8 in such a manner that a winding element 1 having its top face 3 connected to the first busbar 7 is connected to the second busbar 8 via its bottom face 2 and, vice versa, a winding element 1 having its top face 3 connected to the second busbar 8 is connected to the first busbar 7 via its bottom face 2 . This connection of the two busbars 7, 8 to the winding elements 1 in an alternating manner results in the winding elements 1 having alternating polarities along the stacking direction S. Thereby, the magnetic flux of adjacent winding elements 1 can compensate each other. The compensation of the magnetic flux results in a low parasitic inductance, a low parasitic resistance and low negative electromagnetic interactions.

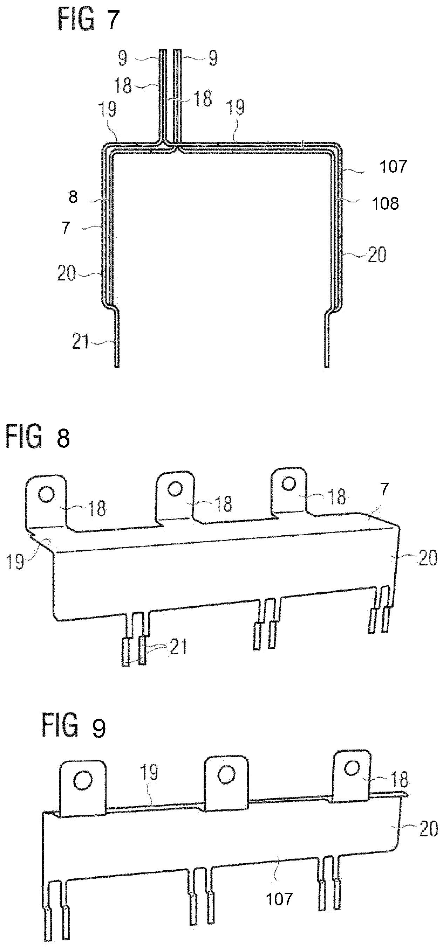

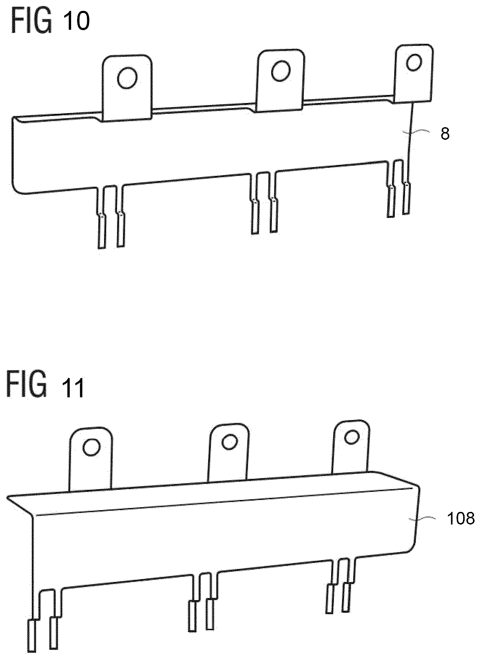

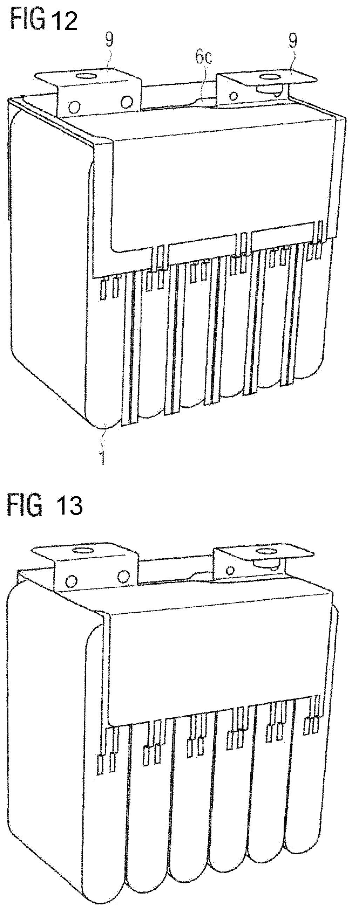

Figures 7 to 11 show busbars of a second example capacitor not according to the invention. Figure 7 shows the first busbar 7, the second busbar 8, a third busbar 107 and a fourth busbar 108. The first busbar 7 is shown in Figure 8. The third busbar 107 is shown in Figure 9. The second busbar 8 is shown in Figure 10. The fourth busbar 108 is shown in Figure 12.

The winding elements 1 of the capacitor are arranged in a single stack 6. In a stacking directions S, the winding elements 1 alternate regarding their polarity.

The first busbar 7 and the second busbar 8 are both arranged on a lateral face 6c of the stack 6. The first busbar 7 and the second busbar 8 overlap each other on the first lateral face 6a of the stack.

When an alternating current is applied to the capacitor, the currents in the overlap of the first busbar 7 and the second busbar 8 have opposite directions. Thus, parasitic inductances, parasitic resistances and negative electromagnetic interactions are low.

In the stacking direction S, the top face 3 of the winding elements 1 on the first lateral face 6a are alternatingly connected to the first busbar 7 and to the second busbar 8. In the stacking direction S, the bottom face 3 of the winding elements 1 on the second lateral face 6b are alternatingly connected to the third busbar 7 and to the fourth busbar 108. The first busbar 7 and the third busbar 107 have the same polarity. The second busbar 8 and the fourth busbar 108 have the same polarity. A first group of winding elements 1 has a top face connected to the first busbar 7 and a bottom face connected to the fourth busbar 108. A second group of winding elements 1 has a top face connected to the second busbar 8 and a bottom face connected to the third busbar 107. In the stacking direction, winding elements from the first group and winding elements from the second group alternate.

This connection of the busbars to the winding elements 1 in an alternating manner results in the winding elements 1 having alternating polarities along the stacking direction S. Thereby, the magnetic flux of adjacent winding elements 1 can compensate each other. The compensation of the magnetic flux results in a low parasitic inductance, a low parasitic resistance and low negative electromagnetic interactions.

Due to the compensation of the magnetic flux, the parasitic inductances and resistances between the winding elements 1 and between the winding elements 1 and the terminals are reduced. Thereby, the impedance from the terminals 9 to each winding element 1 is more homogeneous between winding elements 1 in all the bandwidth, so the performance of the capacitor in all the bandwidth is better. In particular, the capacitor has a low and frequency stable ESR, a low ESL from each pair of terminals, a homogeneous internal current distribution and internal resonances are avoided.

Each of the busbars 7, 8, 107, 108 has a Z-shaped cross-section.

The first busbar 7 comprises a first section 18, a second section 19 and a third section 20. The second section 19 is arranged between the first section 18 and the third section 20. The second section 19 is perpendicular to each of the first section 18 and the third section 20. The first section 18 and the third section 20 are parallel to each other. This design of the first section 18, the second section 19 and the third 20 section results in the Z-shaped cross section of the first busbar 7.

The first section 18 of the first busbar 7 is part of the terminal 9 of the first busbar 7. The second section 19 of the first busbar 7 is arranged on the lateral face 6c of the stack 6. The third section 20 of the first busbar 7 is arranged on the first lateral face 6a of the stack 6. The third section 20 comprises a pair of two protrusions 21 that are electrically and mechanically connected to the top face 3 of a winding element 1. In particular, the third section 20 comprises multiple pairs of two protrusions 21 that are electrically and mechanically connected to the top face 3 of every second winding element 1 in the stacking direction S.

The third busbar 107 is designed analog to the first busbar 7. In particular, the third busbar 107 also comprises a first section 18, a second section 19 and a third section 20. The third busbar 107 also has a Z-shaped cross-section.

The first section 18 of the third busbar 107 is part of the terminal 9 of the third busbar 107. In particular, the terminal 9 is formed by the two first sections 18 of the first busbar 7 and of the third busbar 107. The second section 19 of the third busbar 107 is perpendicular to the first section 18 and is arranged on the lateral face 6c of the stack 6. The third section 20 of the third busbar 107 is perpendicular to the second section 19 and is arranged on the second lateral face 6b of the stack 6. The third section 20 comprises a pair of two protrusions 21 that are electrically and mechanically connected to the bottom face 2 of a winding element 1. In particular, the third section 20 comprises multiple pairs of two protrusions 21 that are electrically and mechanically connected to the bottom faces 2 of those winding element 1 which have a top face 3 that is not connected to the first busbar 7.

The second busbar 8 and the fourth busbar 108 are formed analog to the first busbar 7 and the third busbar 107 and are, therefore, not described in detail.

The first busbar 7 and the second busbar 8 completely overlap each other apart from the protrusions 21 that are connected to the top face 3 of the winding elements 1. The third busbar 107 and the fourth busbar 108 completely overlap each other apart from the protrusions 21 that are connected to the bottom face 2 of the winding elements 1. Thus, the protrusions 21 are the only parts of the busbars 7, 8, 107, 108 wherein the electromagnetic flux of the busbars 7, 8, 107, 108 is not compensated by the respective other busbar. Overall, this results in a very large compensation of the electromagnetic flux in the busbars 7, 8, 107, 108.

Each of the busbars comprises multiple terminals 9. The terminals 9 are distributed symmetric with respect to the winding elements 1 along the busbars. The symmetric arrangement of the terminals 9 optimizes a current balance between the winding elements 1. A non-symmetric arrangement of the terminals 9 would result in an unbalanced current between the winding elements 1 and, thus, a reduced performance of the capacitor.

When an alternating current is applied to the terminals 9 of the busbars, the alternating current flows through each of the busbars.

The Z-shaped cross-section of each of the busbars results in a large overlapping area of the busbars. Thus, due to the large overlap, the parasitic inductances are very low, the parasitic resistances are very low and negative electromagnetic interactions can be avoided.

The busbars are electrically connected to the middle points of the top face 3 or the bottom face 2 of the winding elements 1. The busbars can be adapted to the dimensions of the winding elements 1 and can, in particular, be dimensioned such that they are connected to the middle points of the top face 3 or, respectively, the bottom face 2 of the winding elements 1 independently of the dimensions of the winding elements 1. This increases the current capability and the allowed maximum winding size.

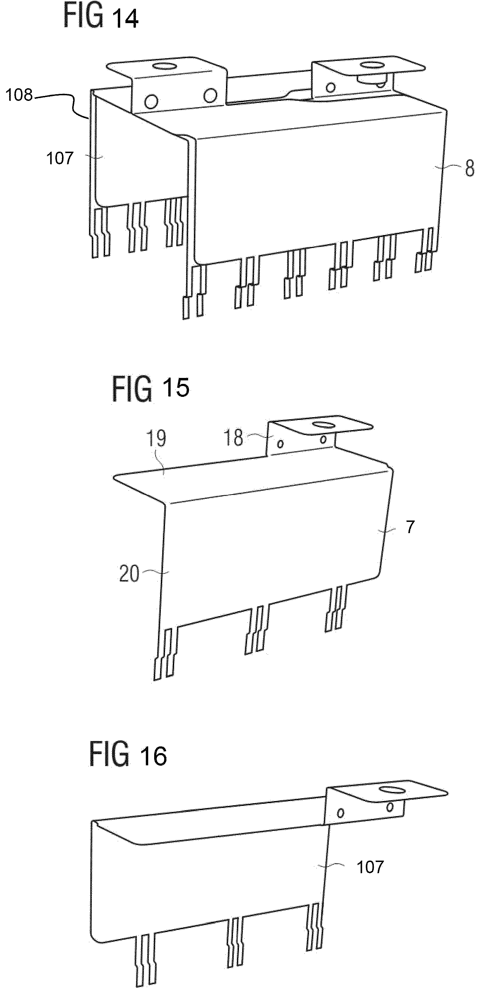

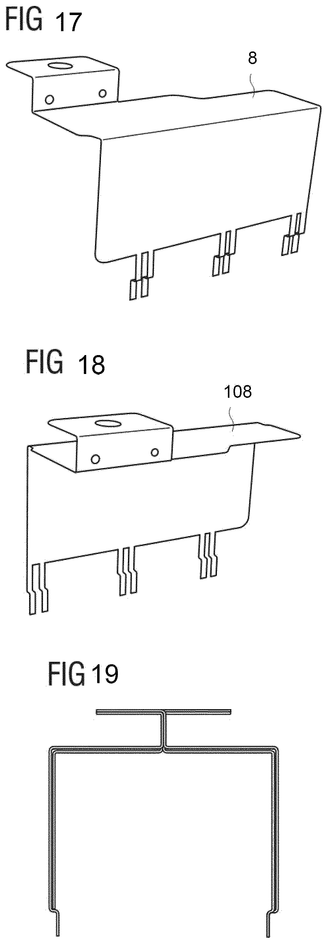

Figures 12 and 13 show a third example capacitor not according to the invention. Figure 14 shows the busbars 7, 8 of the third example capacitor in a perspective view. Figure 15 shows a first busbar 7. A third busbar 107 is shown in Figure 16. A second busbar 8 is shown in Figure 17. A fourth busbar 108 is shown in Figure 18. Figure 19 shows the four busbars 7, 8, 107, 108 in a cross-sectional view.

The third example capacitor is substantially identical to the second example capacitor and differs from the second example capacitor only in the shape and the number of the terminals 9. According to the third example, each of the first busbar 7 and the second busbar 8 has only one terminal 9. The terminal 9 is formed by a first section 18 of the first part 7a, 8a and a first section 18 of the second part 7b, 8b of the respective busbar 7, 8. The first sections 18 each comprise to sub-sections that are perpendicular to each other. Thereby, a bend terminal 9 is formed. The bend terminal 9 has a subsection that is perpendicular to the lateral face 6c of the stack 6 and a sub-section that is parallel to the lateral face 6c.

The capacitor of the third example has the same advantages as the capacitor of the second example resulting from a large overlap of the busbars 7, 8 and from the arrangement of the winding elements 1 with alternating polarity.

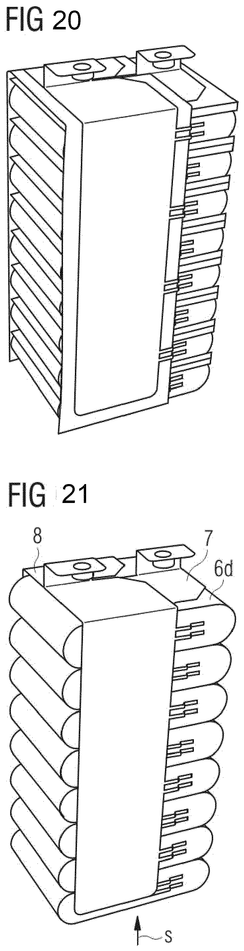

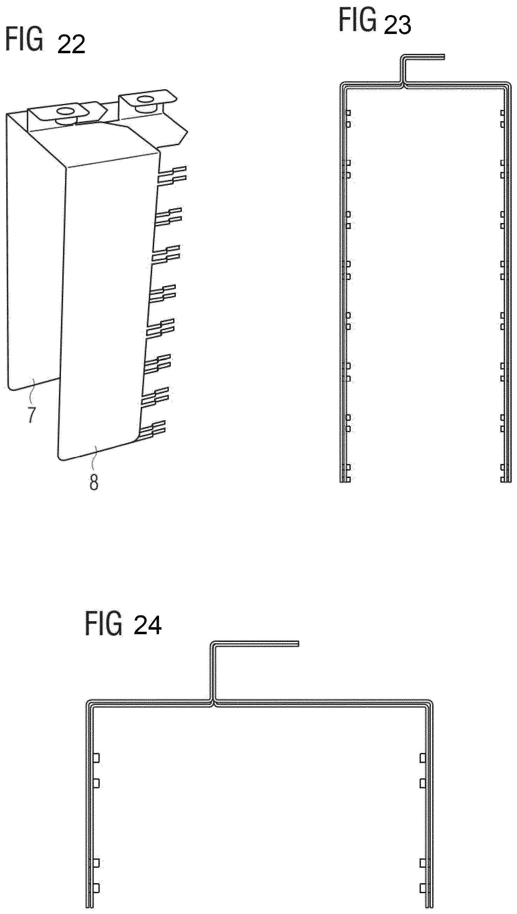

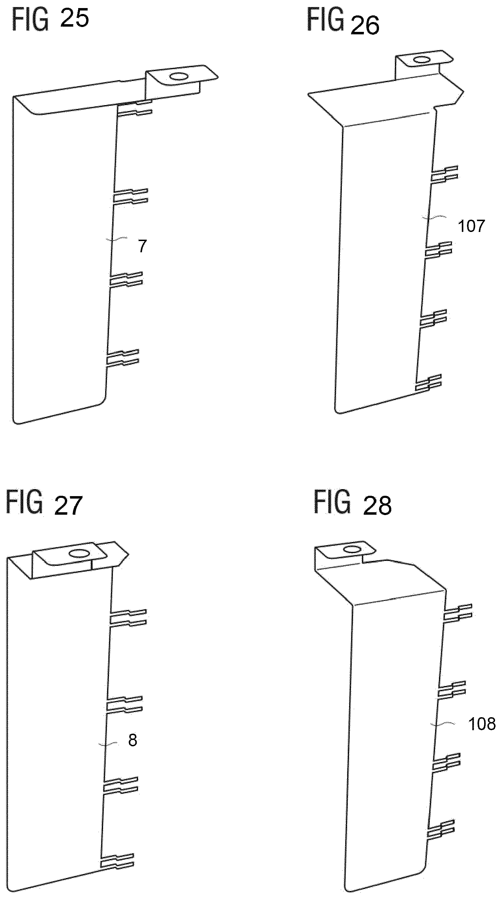

Figures 20 and 21 show a capacitor according to a fourth example. Figure 22 shows the busbars 7, 8, 107, 108 of the capacitor according to the fourth example in a perspective view. Figure 23 shows the busbars 7, 8, 107, 108 in a cross-sectional view. Figure 24 shows an enlarged view of a part of Figure 23. Figure 25 shows a first busbar 7. A third busbar 107 is shown in Figure 26. A second busbar 8 is shown in Figure 27. A fourth busbar 108 is shown in Figure 28.

The capacitor according to the fourth example differs from the capacitor of the third example in that the terminals 9 are arranged on a different lateral face 6d, i.e. on a lateral face 6d having a surface normal that is parallel to the stacking direction S. In contrast to this, the terminals 9 of the capacitor of the third example are arranged on the lateral face 6c wherein the surface normal of the lateral face 6c is perpendicular to the stacking direction S. The other features of the capacitor of the fourth example are identical to the capacitor of the third example. The capacitor of the fourth example has the same advantages as the capacitor of the second example and the capacitor of the third example resulting from a large overlap of the busbars 7, 8 and from the arrangement of the winding elements 1 with alternating polarity.

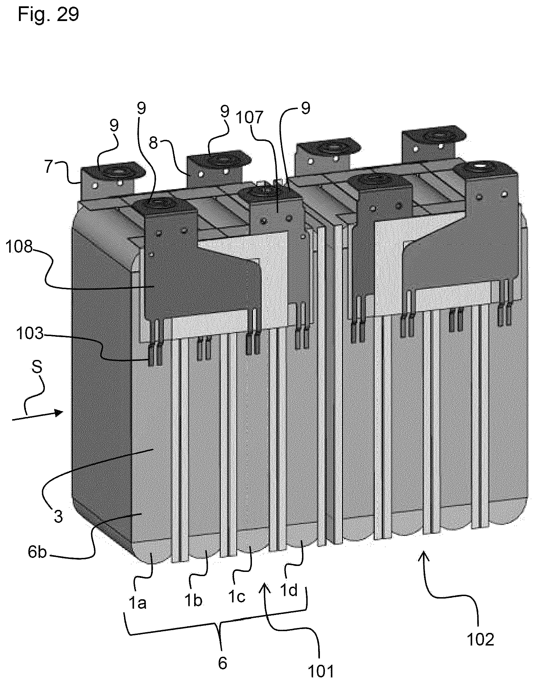

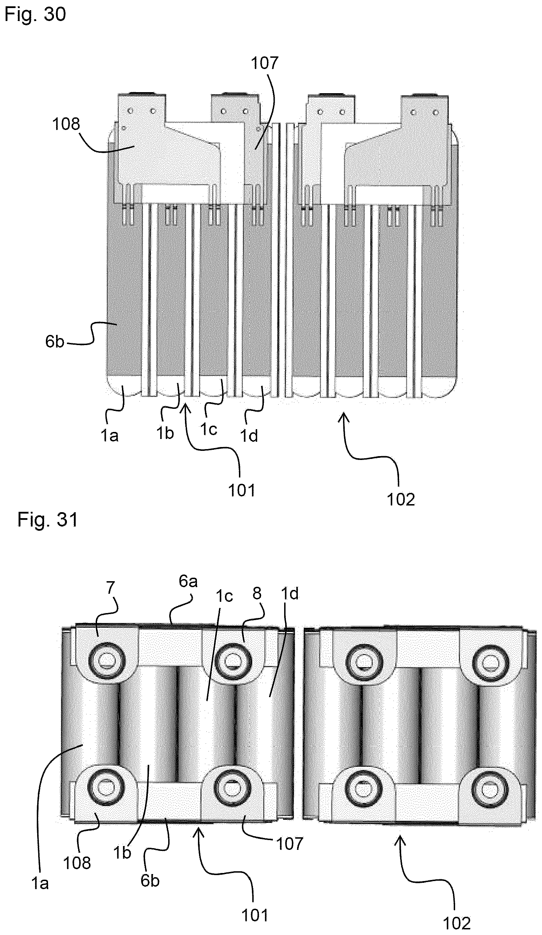

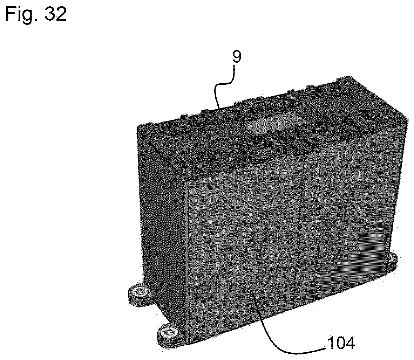

Figure 29 shows a perspective view of a first embodiment of the capacitor according to the invention. Figure 30 shows a side view of the capacitor according to the first embodiment. Figure 31 shows a top view of the capacitor according to the first embodiment. Figure 32 shows the capacitor of the first embodiment wherein the capacitor units are enclosed in an encapsulation. In Figures 29, 30 and 31, the encapsulation is not shown for a better illustration of the other features.

The capacitor according to the first embodiment comprises two capacitor units 101, 102. In the following, the first capacitor unit 101 is described. The second capacitor unit 102 is constructed identically. Each capacitor unit 101, 102 comprises four winding elements arranged in a single stack 6, i.e. a first winding element 1a, a second winding element 1b, a third winding element 1c and a fourth winding element 1d. The winding elements 1a-1d in the stack 6 are arranged such that the top faces 3 of the winding elements form a first lateral face 6a of the stack 6 and the bottom faces 2 of the winding elements 1a-1d form a second lateral face 6b of the stack 6. The second lateral face 6b is opposite of the first lateral face 6a. A stacking direction S of the stack 6 is perpendicular to a surface normal of the first lateral face 6a and the stacking direction S of the stack 6 is perpendicular to a surface normal of the second lateral face 6b.

Each capacitor unit comprises a first busbar 7, a second busbar 8, a third busbar 107 and a fourth busbar 108. The first busbar 7 and the second busbar 8 are arranged on the first lateral face 6a of the stack. The first busbar 7 and the second busbar 8 overlap each other. The third busbar 107 and the fourth busbar 108 are arranged on the second lateral face 6b of the stack. The third busbar 107 and the fourth busbar 108 overlap each other. In the area of the overlap of the busbars 7, 8, 107, 108, a thin isolator is arranged between the busbars which prevents a short circuit between the busbars. Due to the overlap of the first busbar 7 and the second busbar 8 and, respectively, the overlap of the third busbar 107 and the fourth busbar 108, a capacitor unit is provided which has a characteristic that is well suited for power applications. When a current flows through the first busbar 7, a magnetic field is generated by the current. Further, when a current flows through the second busbar 8, another magnetic field is generated by this current. Due to the overlap of the first busbar 7 and the second busbar 8, the magnetic fields have opposite orientations and, therefore, weaken or even cancel each other. Analogously, due to the overlap of the third busbar 107 and the fourth busbar 108, the magnetic fields generated by currents flowing through the third busbar and the fourth busbar have opposite orientations and, therefore, weaken or even cancel each other. Thus, overall, only a very weak magnetic field is generated, when a current is applied to the busbars. This results in a small inductance of the connection of the busbars 7, 8, 107, 108 and between the winding elements 1a-1d. Thus, the inductance of the capacitor unit is very small. [0081] A capacitor with overlapping busbars has a low equivalent series resistance (ESR), a frequency-stable ESR, a low equivalent series inductance (ESL), and a homogeneous internal current distribution. Internal resonances may be avoided.

The first winding element 1a is the outermost winding element of the stack 6. The second winding element 1b is adjacent to the first winding element 1a in the stacking direction S. The third winding element 1c is adjacent to the second winding element 1b in the stacking direction S. The fourth winding element 1d is adjacent to the third winding element 1c in the stacking direction S. The fourth winding element 1d is the last winding element of the stack 6 of the first capacitor unit 101.

The first busbar 7 is connected to the top face 2 of the first winding element 1a and the fourth busbar 108 is connected to the bottom face 3 of the first winding element 1a. The second busbar 8 is connected to the top face 2 of the second winding element 1b and the third busbar 107 is connected to the bottom face 3 of the second winding element 1b. The first busbar 7 is connected to the top face 2 of the third winding element 1c and the fourth busbar 108 is connected to the bottom face 3 of the third winding element 1c. The second busbar 8 is connected to the top face 2 of the fourth winding element 1d and the third busbar 107 is connected to the bottom face 3 of the fourth winding element 1d.

Each busbar comprises a terminal 9 which is configured to be connected to an external connection. Thus, each of the capacitor units 101, 102 comprises four terminals 9. Due to the rather large number of four terminals 9 per capacitor unit, the self-inductance of the capacitor unit is very small and, thereby, the self-inductance of the entire capacitor is also very small.

Via the external connection, a first potential can be applied to the first busbar 7 and to the third busbar 107. Via the external connection, an opposite potential can be applied to the second busbar 8 and to the fourth busbar 108. In this case, a current flows through adjacent winding elements in an opposite direction.

Thereby, the polarities of the winding elements 1a-1d alternate along the stacking direction S. In other words, in the stacking direction, each winding element has an opposite polarity compared to the adjacent winding element.

As a result, the magnetic flux is compensated in all connections, including the connection between winding elements 1a-1d. This results in only very small parasitic inductances and resistances between winding elements 1a-1d and between winding elements 1a-1d and terminals 9. By reducing the parasitic inductances and resistances, the impedance from the terminals to each winding is more homogeneous between the winding elements for each frequency in the bandwidth in which the capacitor is operated. Thus, the performance of the capacitor in the complete bandwidth is better due to a low and frequency stable ESR, a low ESL from each pair of terminals, an homogeneous internal current distribution and the avoidance of internal resonances.

Each busbar 7, 8, 107, 108 comprises at least two tabs 103. Each busbar is connected to a top face 2 or, respectively, to a bottom face 3 of the respective winding element 1a-1d by at at least one tabs 103. Each tab 103 defines a connection point at which the winding element 1a-1d and the busbar 7, 8, 107, 108 are connected. Thus, the busbars 7, 8, 107, 108 are connected to the respective top faces 2 or bottom faces 3. For example, the first busbar 7 is connected to the top face 2 of the first winding element 1a by at least one tabs 103 at at least one connection point and, further, the first busbar 7 is connected to the top face 2 of the third winding element 1c by at least one tab 103 at at least one connection point.

Each busbar 7, 8, 107, 108 comprises a substantially flat metal plate with tabs 103 being arranged at a lower end and the terminal 9 being arranged at the upper end. The terminal 9 is bend by 90° relative to the flat metal plate.

In the embodiment shown in Figures 29 to 32, the capacitor comprises two identical capacitor units 101, 102. In alternate embodiments, the number of capacitor units can be different. For example, the capacitor may comprise only a single capacitor unit 101. Alternatively, the capacitor may comprise three or more capacitor units.

The capacitor further comprises an encapsulation 104. The encapsulation encloses all capacitor units 101, 102 of the capacitor such that only the terminals 9 protrude from the encapsulation 104.

For all the embodiments described above, the quantity of the winding elements 1 per capacitor can be varied. The shape and the dimensions of the winding elements 1 can also be varied in all of the above described embodiments. The terminal 9 layout can also be varied in each of the embodiments.

### Reference numbers

- 1: winding element
- 1a: winding element
- 1b: winding element
- 1c: winding element
- 1d: winding element
- 2: bottom face
- 3: top face
- 4: metallization
- 6: stack
- 6a: first lateral face
- 6b: second lateral face
- 6c: lateral face
- 6d: lateral face
- 7: first busbar
- 7a: first part
- 7b: second part
- 8: second busbar
- 8a: first part
- 8b: second part
- 9: terminal
- 12: isolator plate
- 18: first section
- 19: second section
- 20: third section
- 21: protrusion
- 101: capacitor unit
- 102: capacitor unit
- 103: tab
- 107: third busbar
- 108: fourth busbar

## Claims

1. Capacitor
comprising at least one capacitor unit,
wherein the capacitor unit comprises at least two winding elements (1a, 1b), a first busbar (7), a second busbar (8), a third busbar (107) and a fourth busbar (108),
wherein all winding elements (1a, 1b) of the capacitor unit are arranged in a single stack,
wherein the first busbar (7) and the second busbar (8) are arranged such that they overlap each other,
wherein the first busbar (7) and the second busbar (8) are arranged at a first lateral face (6a) of the stack which has a surface normal perpendicular to a stacking direction (S) of the stack,
wherein, in a stacking direction (S), alternatingly either the first busbar (7) or the second busbar (8) is connected to a top face of the winding elements (1a, 1b),
wherein the third busbar (107) and the fourth busbar (108) are arranged such that they overlap each other, wherein the third and the fourth busbar (108) are arranged on a second lateral face (6b) of the stack opposite to the first lateral face (6a),
wherein, in a stacking direction (S), alternatingly either the third busbar (107) or the fourth busbar (108) is connected to a bottom face of the winding elements (1a, 1b), such that the third busbar (107) is connected to the bottom faces of the winding elements (1a, 1b) which have a top face that is connected to the second busbar (8) and that the fourth busbar (108) is connected to the bottom faces of the winding elements (1a, 1b) which have a top face that is connected to the first busbar (7),
wherein each busbar (7, 8, 107, 108) comprises a terminal (9) which is configured to be connected to an external connection,
wherein each busbar (7, 8, 107, 108) comprises a substantially flat metal plate with tabs (103) being arranged at a lower end of the flat metal plate and the terminal (9) being arranged at an upper end of the flat metal plate.

2. Capacitor according to claim 1,
wherein the first busbar (7) and the second busbar (8) are arranged such that at least 20% of the area of the first busbar (7) is overlapped by the second busbar (8), and
wherein the third busbar (107) and the fourth busbar (108) are arranged such that at least 20% of the area of the third busbar (107) is overlapped by the fourth busbar (108).

3. Capacitor according to claim 1 or claim 2,
wherein the first busbar (7) and the second busbar (8) are arranged such that a current flowing through the first busbar (7) generates a first magnetic field and a current flowing through the second busbar (8) generates a second magnetic field, wherein the first magnetic field and the second magnetic field compensate each other,
and
wherein the third busbar (107) and the fourth busbar (108) are arranged such that a current flowing through the third busbar (107) generates a third magnetic field and a current flowing through the fourth busbar (108) generates a fourth magnetic field, wherein the third magnetic field and the fourth magnetic field compensate each other.

4. Capacitor according to any of claims 1 to 3,
wherein each winding element has a "A" pole and a "B" pole,
wherein the "A" poles of each winding element are connected either to the first busbar (7) or to the third busbar (107), and
wherein the "B" poles of each winding element are connected either to the second busbar (8) or to the fourth busbar (108) .

5. Capacitor according to any of claims 1 to 4,
wherein each of the busbars is connected to the winding elements (1a, 1b) directly, e.g. by welding or soldering.

6. Capacitor according to any of claims 1 to 5,
wherein each busbar (7, 8, 107, 108) of the capacitor unit is connected to the top face or to the bottom face of the respective winding element.

7. Capacitor according to any of claims 1 to 6,
wherein, in the stacking direction (S) of the stack, each winding element (1a, 1b) has an opposite polarity compared to the adjacent winding element (1a, 1b).

8. Capacitor according to any of claims 1 to 7,
wherein, the winding elements (1a, 1b) are arranged in the stack such that the top faces of the winding elements (1a, 1b) are arranged at the first lateral face (6a) of the stack and the bottom faces of the winding elements (1a, 1b) are arranged at the second lateral face (6b) of the stack.

9. Capacitor according to any of claims 1 to 8,
wherein the winding elements (1a, 1b) have a non-circular diameter.

10. Capacitor according to any of claims 1 to 9,
comprising an encapsulation which encloses the capacitor unit.

11. Capacitor according to any of claims 1 to 10,
comprising at least a second capacitor unit,
wherein the second capacitor unit comprises at least two winding elements (1a, 1b), a first busbar (7), a second busbar (8), a third busbar (107) and a fourth busbar (108),
wherein all winding elements (1a, 1b) of the second capacitor unit are arranged in a single stack,
wherein the first busbar (7) and the second busbar (8) are arranged such that they overlap each other,
wherein the first busbar (7) and the second busbar (8) are arranged at a first lateral face (6a) of the stack which has a surface normal perpendicular to a stacking direction (S) of the stack,
wherein, in a stacking direction (S), alternatingly either the first busbar (7) or the second busbar (8) is connected to a top face of the winding elements (1a, 1b),
wherein the third busbar (107) and the fourth busbar (108) are arranged such that they overlap each other,
wherein the third and the fourth busbar (108) are arranged on a second lateral face (6b) of the stack opposite to the first lateral face (6a),
wherein, in a stacking direction (S), alternatingly either the third busbar (107) or the fourth busbar (108) is connected to a bottom face of the winding elements (1a, 1b), such that the third busbar (107) is connected to the bottom faces of the winding elements (1a, 1b) which have a top face that is connected to the second busbar (8) and that the fourth busbar (108) is connected to the bottom faces of the winding elements (1a, 1b) which have a top face that is connected to the first busbar (7),
wherein each busbar (7, 8, 107, 108) comprises a terminal (9) which is configured to be connected to an external connection,
wherein each busbar (7, 8, 107, 108) comprises a substantially flat metal plate with tabs (103) being arranged at a lower end of the flat metal plate and the terminal (9) being arranged at the upper end of the flat metal plate.

12. Capacitor according to claim 11,
wherein the at least two capacitor units are arranged such that the stacks of winding elements (1a, 1b) of each of the at least two capacitor units are arranged in one or more rows wherein the stacking direction (S) of the stacks are parallel to each other.

13. Capacitor according to claim 11 or claim 12,
comprising an encapsulation which encloses the at least two capacitor units.

14. Capacitor according to any of claims 12 to 13,
wherein, in each of the at least two capacitor units, each busbar of the capacitor unit is connected to the top face or to the bottom face of the respective winding element.

15. Power electronics application comprising a capacitor according to any of claims 1 to 14.

16. Use of a capacitor according to any of claims 1 to 14 in a power electronics application.

## Patentansprüche

1. Kondensator
aufweisend mindestens eine Kondensatoreinheit,
wobei die Kondensatoreinheit mindestens zwei Wicklungselemente (1a, 1b), eine erste Sammelschiene (7), eine zweite Sammelschiene (8), eine dritte Sammelschiene (107) und eine vierte Sammelschiene (108) aufweist,
wobei alle Wicklungselemente (1a, 1b) der Kondensatoreinheit in einem einzigen Stapel angeordnet sind,
wobei die erste Sammelschiene (7) und die zweite Sammelschiene (8) so angeordnet sind, dass sie sich gegenseitig überlappen,
wobei die erste Sammelschiene (7) und die zweite Sammelschiene (8) an einer ersten Seitenfläche (6a) des Stapels angeordnet sind, deren Oberflächennormale senkrecht zu einer Stapelrichtung (S) des Stapels ist,
wobei in einer Stapelrichtung (S) abwechselnd entweder die erste Sammelschiene (7) oder die zweite Sammelschiene (8) mit einer Oberseite der Wicklungselemente (1a, 1b) verbunden ist,
wobei die dritte Sammelschiene (107) und die vierte Sammelschiene (108) so angeordnet sind, dass sie sich gegenseitig überlappen,
wobei die dritte und die vierte Sammelschiene (108) an einer zweiten Seitenfläche (6b) des Stapels gegenüber der ersten Seitenfläche (6a) angeordnet sind,
wobei in einer Stapelrichtung (S) abwechselnd entweder die dritte Sammelschiene (107) oder die vierte Sammelschiene (108) mit einer Unterseite der Wicklungselemente (1a, 1b) verbunden ist, derart, dass die dritte Sammelschiene (107) mit den Unterseiten der Wicklungselemente (1a, 1b) verbunden ist, deren Oberseite mit der zweiten Sammelschiene (8) verbunden ist, und die vierte Sammelschiene (108) mit den Unterseiten der Wicklungselemente (1a, 1b) verbunden ist, deren Oberseite mit der ersten Sammelschiene (7) verbunden ist,
wobei jede Sammelschiene (7, 8, 107, 108) einen Anschluss (9) aufweist, der zum Anschluss an eine externe Verbindung ausgebildet ist,
wobei jede der Sammelschienen (7, 8, 107, 108) eine im Wesentlichen flache Metallplatte aufweist, an deren unteren Ende Laschen (103) angeordnet sind, wobei der Anschluss (9) am oberen Ende angeordnet ist.

2. Kondensator nach Anspruch 1,
wobei die erste Sammelschiene (7) und die zweite Sammelschiene (8) so angeordnet sind, dass mindestens 20 % der Fläche der ersten Sammelschiene (7) von der zweiten Sammelschiene (8) überlappt werden,
und
wobei die dritte Sammelschiene (107) und die vierte Sammelschiene (108) so angeordnet sind, dass mindestens 20 % der Fläche der dritten Sammelschiene (107) von der vierten Sammelschiene (108) überlappt werden.

3. Kondensator nach Anspruch 1 oder Anspruch 2,
wobei die erste Sammelschiene (7) und die zweite Sammelschiene (8) so angeordnet sind, dass ein durch die erste Sammelschiene (7) fließender Strom ein erstes Magnetfeld erzeugt und ein durch die zweite Sammelschiene (8) fließender Strom ein zweites Magnetfeld erzeugt, wobei sich das erste Magnetfeld und das zweite Magnetfeld gegenseitig kompensieren,
und
wobei die dritte Sammelschiene (107) und die vierte Sammelschiene (108) so angeordnet sind, dass ein durch die dritte Sammelschiene (107) fließender Strom ein drittes Magnetfeld erzeugt und ein durch die vierte Sammelschiene (108) fließender Strom ein viertes Magnetfeld erzeugt, wobei sich das dritte Magnetfeld und das vierte Magnetfeld gegenseitig kompensieren.

4. Kondensator nach einem der Ansprüche 1 bis 3,
wobei jedes Wicklungselement einen "A"-Pol und einen "B"-Pol aufweist,
wobei die "A"-Pole jedes Wicklungselements entweder mit der ersten Sammelschiene (7) oder mit der dritten Sammelschiene (107) verbunden sind, und
wobei die "B"-Pole jedes Wicklungselements entweder mit der zweiten Sammelschiene (8) oder mit der vierten Sammelschiene (108) verbunden sind.

5. Kondensator nach einem der Ansprüche 1 bis 4,
wobei jede der Sammelschienen direkt, z. B. durch Schweißen oder Löten, mit den Wicklungselementen (1a, 1b) verbunden ist.

6. Kondensator nach einem der Ansprüche 1 bis 5,
wobei jede Sammelschiene (7, 8, 107, 108) der Kondensatoreinheit mit der Oberseite oder der Unterseite des jeweiligen Wicklungselements verbunden ist.

7. Kondensator nach einem der Ansprüche 1 bis 6,
wobei in Stapelrichtung (S) des Stapels jedes Wicklungselement (1a, 1b) im Vergleich zum benachbarten Wicklungselement (1a, 1b) eine entgegengesetzte Polarität aufweist.

8. Kondensator nach einem der Ansprüche 1 bis 7,
wobei die Wicklungselemente (1a, 1b) im Stapel so angeordnet sind, dass die Oberseiten der Wicklungselemente (1a, 1b) an der ersten Seitenfläche (6a) des Stapels und die Unterseiten der Wicklungselemente (1a, 1b) an der zweiten Seitenfläche (6b) des Stapels angeordnet sind.

9. Kondensator nach einem der Ansprüche 1 bis 8,
wobei die Wicklungselemente (1a, 1b) einen nicht kreisförmigen Durchmesser aufweisen.

10. Kondensator nach einem der Ansprüche 1 bis 9, aufweisend eine Verkapselung, die die Kondensatoreinheit umschließt.

11. Kondensator nach einem der Ansprüche 1 bis 10, aufweisend zumindest eine zweite Kondensatoreinheit,
wobei die zweite Kondensatoreinheit mindestens zwei Wicklungselemente (1a, 1b), eine erste Sammelschiene (7), eine zweite Sammelschiene (8), eine dritte Sammelschiene (107) und eine vierte Sammelschiene (108) aufweist,
wobei alle Wicklungselemente (1a, 1b) der zweiten Kondensatoreinheit in einem einzigen Stapel angeordnet sind,
wobei die erste Sammelschiene (7) und die zweite Sammelschiene (8) so angeordnet sind, dass sie sich gegenseitig überlappen,
wobei die erste Sammelschiene (7) und die zweite Sammelschiene (8) an einer ersten Seitenfläche (6a) des Stapels angeordnet sind, deren Oberflächennormale senkrecht zur Stapelrichtung (S) des Stapels ist,
wobei in einer Stapelrichtung (S) abwechselnd entweder die erste Sammelschiene (7) oder die zweite Sammelschiene (8) mit einer Oberseite der Wicklungselemente (1a, 1b) verbunden ist,
wobei die dritte Sammelschiene (107) und die vierte Sammelschiene (108) so angeordnet sind, dass sie sich gegenseitig überlappen,
wobei die dritte und die vierte Sammelschiene (108) an einer zweiten Seitenfläche (6b) des Stapels gegenüber der ersten Seitenfläche (6a) angeordnet sind,
wobei in einer Stapelrichtung (S) abwechselnd entweder die dritte Sammelschiene (107) oder die vierte Sammelschiene (108) mit einer Unterseite der Wicklungselemente (1a, 1b) verbunden ist, derart, dass die dritte Sammelschiene (107) mit den Unterseiten der Wicklungselemente (1a, 1b) verbunden ist, deren Oberseite mit der zweiten Sammelschiene (8) verbunden ist, und die vierte Sammelschiene (108) mit den Unterseiten der Wicklungselemente (1a, 1b) verbunden ist, deren Oberseite mit der ersten Sammelschiene (7) verbunden ist,
wobei jede Sammelschiene (7, 8, 107, 108) einen Anschluss (9) aufweist, der zum Anschluss an eine externe Verbindung ausgebildet ist,
wobei jede der Sammelschienen (7, 8, 107, 108) eine im Wesentlichen flache Metallplatte aufweist, an deren unteren Ende Laschen (103) angeordnet sind, wobei der Anschluss (9) am oberen Ende angeordnet ist.

12. Kondensator nach Anspruch 11,
wobei die zumindest zwei Kondensatoreinheiten so angeordnet sind, dass die Stapel von Wicklungselementen (1a, 1b) der zumindest zwei Kondensatoreinheiten in einer oder mehreren Reihen angeordnet sind, wobei die Stapelrichtung (S) der Stapel parallel zueinander verläuft.

13. Kondensator nach Anspruch 11 oder Anspruch 12, aufweisend eine Verkapselung, die die zumindest zwei Kondensatoreinheiten umschließt.

14. Kondensator nach einem der Ansprüche 12 bis 13,
wobei in jeder der zumindest zwei Kondensatoreinheiten jede Sammelschiene der Kondensatoreinheit mit der Oberseite oder der Unterseite des jeweiligen Wicklungselements verbunden ist.

15. Leistungselektronikanwendung aufweisend einen Kondensator nach einem der Ansprüche 1 bis 14.

16. Verwendung eines Kondensators nach einem der Ansprüche 1 bis 14 in einer Leistungselektronikanwendung.

## Revendications

1. Condensateur
comprenant au moins une unité de condensateur, l'unité de condensateur comprenant au moins deux éléments d'enroulement (1a, 1b), une première barre omnibus (7), une deuxième barre omnibus (8), une troisième barre omnibus (107) et une quatrième barre omnibus (108),
dans lequel tous les éléments d'enroulement (1a, 1b) de l'unité de condensateur sont agencés en un empilement unique,
dans lequel la première barre omnibus (7) et la deuxième barre omnibus (8) sont agencées de telle sorte qu'elles se chevauchent,
dans lequel la première barre omnibus (7) et la deuxième barre omnibus (8) sont agencées au niveau d'une première face latérale (6a) de l'empilement, une normale à la surface de ladite première face latérale (6a) étant perpendiculaire à une direction d'empilement (S) de l'empilement
dans lequel, dans une direction d'empilement (S), soit la première barre omnibus (7), soit la deuxième barre omnibus (8) est connectée en alternance à une face supérieure des éléments d'enroulement (1a, 1b),
dans lequel la troisième barre omnibus (107) et la quatrième barre omnibus (108) sont agencées de telle sorte qu'elles se chevauchent,
dans lequel la troisième et la quatrième barre omnibus (108) sont agencées sur une deuxième face latérale (6b) de l'empilement opposée à la première face latérale (6a), dans lequel, dans une direction d'empilement (S), soit la troisième barre omnibus (107), soit la quatrième barre omnibus (108) est connectée en alternance à une face inférieure des éléments d'enroulement (1a, 1b), de telle sorte que la troisième barre omnibus (107) soit connectée aux faces inférieures des éléments d'enroulement (1a, 1b) qui présentent une face supérieure qui est connectée à la deuxième barre omnibus (8) et que la quatrième barre omnibus (108) soit connectée aux faces inférieures des éléments d'enroulement (1a, 1b) qui présentent une face supérieure qui est connectée à la première barre omnibus (7),
dans lequel chaque barre omnibus (7, 8, 107, 108) comprend une borne (9) qui est configurée pour être connectée à une connexion externe,
dans lequel chaque barre omnibus (7, 8, 107, 108) comprend une plaque métallique sensiblement plane, des pattes (103) étant agencées à une extrémité inférieure
de la plaque métallique plane, et la borne (9) étant agencée à une extrémité supérieure de la plaque métallique plane.

2. Condensateur selon la revendication 1,
dans lequel la première barre omnibus (7) et la deuxième barre omnibus (8) sont agencées de telle sorte qu'au moins 20% de la surface de la première barre omnibus (7) soit chevauchée par la deuxième barre omnibus (8), et
dans lequel la troisième barre omnibus (107) et la quatrième barre omnibus (108) sont agencées de telle sorte qu'au moins 20% de la surface de la troisième barre omnibus (107) soit chevauchée par la quatrième barre omnibus (108).

3. Condensateur selon la revendication 1 ou la revendication 2,
dans lequel la première barre omnibus (7) et la deuxième barre omnibus (8) sont agencées de telle sorte qu'un courant passant à travers la première barre omnibus (7) génère un premier champ magnétique et qu'un courant passant à travers la deuxième barre omnibus (8) génère un deuxième champ magnétique, le premier champ magnétique et le deuxième champ magnétique se compensant mutuellement,
et
dans lequel la troisième barre omnibus (107) et la quatrième barre omnibus (108) sont agencées de telle sorte qu'un courant passant à travers la troisième barre omnibus (107) génère un troisième champ magnétique et qu'un courant passant à travers la quatrième barre omnibus (108) génère un quatrième champ magnétique, le troisième champ magnétique et le quatrième champ magnétique se compensant mutuellement.

4. Condensateur selon l'une quelconque des revendications 1 à 3,
dans lequel chaque élément d'enroulement présente un pôle « A » et un pôle « B »,
dans lequel les pôles « A » de chaque élément d'enroulement sont connectés soit à la première barre omnibus (7), soit à la troisième barre omnibus (107), et dans lequel les pôles « B » de chaque élément d'enroulement sont connectés soit à la deuxième barre omnibus (8), soit à la quatrième barre omnibus (108).

5. Condensateur selon l'une quelconque des revendications 1 à 4,
dans lequel chacune des barres omnibus est connectée directement aux éléments d'enroulement (1a, 1b), par exemple par soudage ou brasage.

6. Condensateur selon l'une quelconque des revendications 1 à 5,
dans lequel chaque barre omnibus (7, 8, 107, 108) de l'unité de condensateur est connectée à la face supérieure ou à la face inférieure de l'élément d'enroulement respectif.

7. Condensateur selon l'une quelconque des revendications 1 à 6,
dans lequel, dans la direction d'empilement (S) de l'empilement, chaque élément d'enroulement (1a, 1b) présente une polarité opposée par rapport à l'élément d'enroulement (1a, 1b) adjacent.

8. Condensateur selon l'une quelconque des revendications 1 à 7,
dans lequel les éléments d'enroulement (1a, 1b) sont agencés dans l'empilement de telle sorte que les faces supérieures des éléments d'enroulement (1a, 1b) soient agencées au niveau de la première face latérale (6a) de l'empilement et que les faces inférieures des éléments d'enroulement (1a, 1b) soient agencées au niveau de la deuxième face latérale (6b) de l'empilement.

9. Condensateur selon l'une quelconque des revendications 1 à 8,
dans lequel les éléments d'enroulement (1a, 1b) présentent un diamètre non circulaire.

10. Condensateur selon l'une quelconque des revendications 1 à 9,
comprenant une encapsulation qui renferme l'unité de condensateur.

11. Condensateur selon l'une quelconque des revendications 1 à 10,
comprenant au moins une deuxième unité de condensateur, dans lequel la deuxième unité de condensateur comprend au moins deux éléments d'enroulement (1a, 1b), une première barre omnibus (7), une deuxième barre omnibus (8), une troisième barre omnibus (107) et une quatrième barre omnibus (108),
dans lequel tous les éléments d'enroulement (1a, 1b) de la deuxième unité de condensateur sont agencés en un empilement unique,
dans lequel la première barre omnibus (7) et la deuxième barre omnibus (8) sont agencées de telle sorte qu'elles se chevauchent,
dans lequel la première barre omnibus (7) et la deuxième barre omnibus (8) sont agencées au niveau d'une première face latérale (6a) de l'empilement, une normale à la surface de ladite première face latérale (6a) étant perpendiculaire à une direction d'empilement (S) de l'empilement,
dans lequel, dans une direction d'empilement (S), soit la première barre omnibus (7), soit la deuxième barre omnibus (8) est connectée en alternance à une face supérieure des éléments d'enroulement (1a, 1b),
dans lequel la troisième barre omnibus (107) et la quatrième barre omnibus (108) sont agencées de telle sorte qu'elles se chevauchent,
dans lequel la troisième et la quatrième barre omnibus (108) sont agencées sur une deuxième face latérale (6b) de l'empilement opposée à la première face latérale (6a), dans lequel, dans une direction d'empilement (S), soit la troisième barre omnibus (107), soit la quatrième barre omnibus (108) est connectée en alternance à une face inférieure des éléments d'enroulement (1a, 1b), de telle sorte que la troisième barre omnibus (107) soit connectée aux faces inférieures des éléments d'enroulement (1a, 1b) qui présentent une face supérieure qui est connectée à la deuxième barre omnibus (8) et que la quatrième barre omnibus (108) soit connectée aux faces inférieures des éléments d'enroulement (1a, 1b) qui présentent une face supérieure qui est connectée à la première barre omnibus (7),
dans lequel chaque barre omnibus (7, 8, 107, 108) comprend une borne (9) qui est configurée pour être connectée à une connexion externe,
dans lequel chaque barre omnibus (7, 8, 107, 108) comprend une plaque métallique sensiblement plane, des pattes (103) étant agencées à une extrémité inférieure
de la plaque métallique plane, et la borne (9) étant agencée à une extrémité supérieure de la plaque métallique plane.

12. Condensateur selon la revendication 11,
dans lequel les au moins deux unités de condensateur sont agencées de telle sorte que les empilements d'éléments d'enroulement (1a, 1b) de chacune des au moins deux unités de condensateur soient agencés en une ou plusieurs rangées, les directions d'empilement (S) des empilements étant parallèles entre elles.

13. Condensateur selon la revendication 11 ou la revendication 12,
comprenant une encapsulation qui renferme les au moins deux unités de condensateur.

14. Condensateur selon l'une quelconque des revendications 12 à 13,
dans lequel, dans chacune des au moins deux unités de condensateur, chaque barre omnibus de l'unité de condensateur est connectée à la face supérieure ou à la face inférieure de l'élément d'enroulement respectif.

15. Application d'électronique de puissance comprenant un condensateur selon l'une quelconque des revendications 1 à 14.

16. Utilisation d'un condensateur selon l'une quelconque des revendications 1 à 14 dans une application d'électronique de puissance.
